Europäisches Patentamt

European Patent Office

Office européen des brevets

(19)

(11) Veröffentlichungsnummer: **0 229 937 B1**

(12) **EUROPÄISCHE PATENTSCHRIFT**

(45) Veröffentlichungstag der Patentschrift: **22.01.92**

(51) Int. Cl.⁵: **G11B 23/023**, G11B 33/04

(21) Anmeldenummer: **86116546.2**

(22) Anmeldetag: **28.11.86**

(54) **Aufbewahrungsbehälter für Aufzeichnungsträger.**

(30) Priorität: **13.12.85 DE 3544054**

(43) Veröffentlichungstag der Anmeldung:
**29.07.87 Patentblatt 87/31**

(45) Bekanntmachung des Hinweises auf die
Patenterteilung:
**22.01.92 Patentblatt 92/04**

(84) Benannte Vertragsstaaten:
**DE ES FR GB IT SE**

(56) Entgegenhaltungen:
**EP-A- 0 092 666**
**EP-A- 0 132 533**
**EP-A- 0 163 221**

(73) Patentinhaber: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Sparing Röhl Henseler Patentanwälte European Patent Attorneys**
**Rethelstrasse 123**
**W-4000 Düsseldorf 1(DE)**

## Beschreibung

Die Erfindung betrifft einen Aufbewahrungsbehälter für Aufzeichnungsträger mit einem frontseitig offenen Gehäuse, das eine Mehrzahl von Haltern für jeweils mindestens einen Aufzeichnungsträger aufnimmt, wobei eine den Gehäuseinnenraum abdeckende Front vorgesehen ist, und die Halter einzeln in Frontrichtung aus dem Gehäuse heraus in eine Position verlagerbar sind, in der der darin befindliche Aufzeichnungsträger bequem erfaßbar ist, und mit im Frontbereich angeordneten und durch frontseitige Anzeigefenster sichtbaren Anzeigemitteln zum Anzeigen fur, welche Halter mit Aufzeichnungsträgern belegt sind.

Aus der DE-OS 32 15 721 ist ein Magnetbandkassettenbehälter bekannt, bei dem eine sichtbare Anzeige für das Belegtsein eines in einem Gehäuse angeordneten Schiebers dadurch vorgesehen ist, daß ein verschieb- oder verschwenkbares farbiges Teil durch das Einlegen einer Kassette in den Schieber in den Bereich eines Anzeigefensters gebracht wird, so daß es von außen sichtbar wird. Eine derartige Anzeige hat jedoch den Nachteil, daß sie in der Dunkelheit nicht erkennbar ist. Da derartige Aufbewahrungsbehälter häufig in Kraftfahrzeugen verwendet und damit während der Fahrt bedient werden, kann die Aufmerksamkeit des Fahrers durch das Suchen etwa nach einem freien Halter abgelenkt werden, was insbesondere in der Dunkelheit nachteilige Folgen haben kann.

Ferner ist aus der EP-A-132 533 ein Behälter für die Aufbewahrung von Magnetbandkassetten bekannt, welcher mit einer Lichtquelle und zugeordneten Lichtleitern versehen ist, die das Auffinden und Betätigen der Schieber zur Entnahme der Kassetten auch bei fehlender Ausleuchtung ermöglichen.

Aufgabe der Erfindung ist es daher, einen Aufbewahrungsbehälter der im Oberbegriff des Anspruchs 1 genannten Art zu schaffen, der es ermöglicht, auch bei Dunkelheit die Belegung oder Nichtbelegung eines Halters für Aufzeichnungsträger ohne weiteres zu erkennen.

Diese Aufgabe wird dadurch gelöst, daß die Anzeigemittel Lichtquellen, die durch die Anzeigefenster von außen sichtbar sind, und zugehörige Umschaltmittel für Helligkeit oder Farbe des im jeweiligen Anzeigefenster sichtbaren Lichtes umfassen, die durch Entnehmen und Einlegen eines Aufzeichnungsträgers in einen Halter betätigbar sind.

Als Aufzeichnungsträger kommen beispielsweise Magnetbandkassetten, aber auch insbesondere flache Aufzeichnungsträger wie Audio- und Videoplatten, etwa sogenannte Compactdiscs, infrage.

Hierbei kann durch die Umschaltmittel eine Farb- oder eine Ein-/Ausschaltung vorgenommen werden. Die Lichtquellen können elektrische Lichtquellen, insbesondere Leuchtdioden, oder aber Lichtleiter sein, wobei insbesondere für die Lichtleiter eine gemeinsame elektrische Lichtquelle vorgesehen sein kann.

Für jeden Aufzeichnungsträger können auch zwei elektrische Lichtquellen unterschiedlicher Farbe, etwa in Form einer oder zwei entsprechenden Leuchtdioden, vorgesehen sein. Die Umschaltmittel können elektrische Schalter sein, sie können Lichtmodulationsmittel umfassen, die insbesondere zwei transparente Felder aufweisen können, von denen wenigstens eines farbig ist. Die beiden Felder können quer zur Lichtstromrichtung benachbart angeordnet und abwechselnd entsprechend dem Vorhandensein bzw. Nichtvorhandensein des Aufzeichnungsträgers in den Lichtweg zum Anzeigefenster bringbar oder in Lichtstromrichtung hintereinander angeordnet sein, wobei wenigstens ein Feld durch Einlegen eines Aufzeichnungsträgers (22) in den Lichtweg bringbar ist. Die Modulationsmittel können auch eine in den Lichtweg zum Anzeigefenster bringbare Blende umfassen. Auch kann der Aufzeichnungsträger als Blende dienen, indem der Lichtweg von der Lichtquelle zum Anzeigefenster durch den Aufnahmebereich des Aufzeichnungsträgers im Halter führt.

Der Halter kann eine Frontwand, in der das Anzeigefenster angeordnet ist, oder das Gehäuse einen Frontwandabschnitt aufweisen, in dem die Anzeigefenster angeordnet sind. Ein Tastorgan kann im Aufnahmebereich des Halters für den Aufzeichnungsträger vorgesehen sein oder das Gehäuse kann Tastorgane, die in die Aufnahmebereiche der Aufzeichnungsträger auf den Haltern ragen, aufweisen. Das Umschaltmittel kann im Halter angeordnet sein. Bei als elektrischer Schalter ausgebildetem Umschaltmittel kann die Stromversorgung der Lichtquellen bei in Entnahmeposition für den Aufzeichnungsträger befindlichem Halter unterbrochen sein. Zwischen Gehäuse und Halter kann eine Steck- oder eine Schleifkontaktierung vorgesehen sein. Die Lichtquelle kann im Halter angeordnet sein.

Die Lichtleiter können in dem Gehäuse angeordnet und zu den Anzeigefenstern geführt sein. Sie können durch die Halter geführt sein. Zwischen Gehäuse und Halter kann eine Lichtleiterkupplung vorgesehen sein. Die Lichtleiter können abgedeckt bis in den Bereich der Anzeigefenster geführt sein. Das Modulationsmittel kann zwischen Lichtleiterabschnitte schwenkbar sein. Die Umschaltmittel können einen Schwenkhebel umfassen, der in eine erste Endstellung federvorgespannt ist. Der Schwenkhebel kann eine toleranzausgleichende Lagerung besitzen. Die Lagerung kann offene Lagerschalen aufweisen und ein Anschlag kann vorgesehen sein, der eine zweite Endstellung definierend bereits nach einer Teilschwenkung des Schwenkhebels erreicht wird.

Benachbart zu dem Anzeigefenster kann eine Betätigungstaste zum Bringen des Halters in die Entnahmeposition für den Aufzeichnungsträger vorgesehen sein. Von der gemeinsamen elektrischen Lichtquelle können spinnenartig Lichtleiter zu den Ebenen der einzelnen Halter im Gehäuse führen. Der Halter kann eine damit gelenkig verbundene frontseitige Klappe aufweisen, wobei für beide Teile jeweils ein Lichtleiter vorgesehen ist, die bei fluchtenden Teilen stirnseitig gekoppelt sind. Weitere Elemente der Front können durch die Lichtquellen beleuchtbar sein, bespielsweise Ziffern. Beleuchtungsmittel können vorgesehen sein, deren Strahlung auf die Front des Gehäuses gerichtet ist. Ein sich von der gemeinsamen elektrischen Lichtquelle zur Frontseite des Gehäuses sich erstreckender Lichtleiter kann vorgesehen sein. Die Lichtleiter können faseroptische Lichtleiter sein. Die Anzeigemittel können zum besseren Erkennen bei Tageslicht mit Auflichtreflexfarbe versehen sein. Die Umschaltmittel können ein Betätigungsmittel im gehäuseinnenseitigen Bereich des Halters aufweisen, das durch den Druck auf den Aufzeichnungsträgers beim Einlegen durch dessen zur Rückwand des Gehäuses gerichtete Seite auslenkbar ist.

Weitere Ausgestaltungen der Erfindung sind der nachfolgenden Beschreibung und den Ansprüchen zu entnehmen.

Die Erfindung wird nachstehend anhand der in den beigefügten Abbildungen dargestellten Ausführungsbeispiele näher erläutert.

Fig. 1 zeigt perspektivisch einen Aufbewahrungsbehälter für Platten.

Fig. 2 zeigt teilweise schematisch einen Aufbewahrungsbehälter für Platten in Seitenansicht.

Fig. 3 zeigt eine rückwärtige Ansicht des Aufbewahrungsbehälters.

Fig. 4 zeigt hälftig einen Schnitt entsprechend der Linie IV-IV von Fig. 3.

Fig. 5 zeigt einen Schnitt längs der Linie V-V von Fig. 4.

Fig. 6 zeigt einen Schnitt längs der Linie VI-VI von Fig. 4.

Fig. 7 zeigt einen Schnitt längs der Linie VII-VII von Fig. 4.

Fig. 8 zeigt einen Ausschnitt entsprechend dem Schnitt IV-IV bei eingeschobenem Halter.

Fig. 9 zeigt einen Ausschnitt entsprechend dem Schnitt IV-IV bei ausgeschobenem Halter.

Fig. 10 zeigt einen Schnitt längs der Linie X-X von Fig. 8.

Fig. 11 zeigt einen Schnitt entsprechend dem Schnitt gemäß der Linie IV-IV einer weiteren Ausführungsform eines Aufbewahrungsbehälters für Platten.

Fig. 12 zeigt einen Schnitt längs der Linie XII-XII von Fig. 11.

Fig. 13 zeigt ein Detail der Ausführungsform von Fig. 11.

Fig. 14 zeigt einen Schnitt entsprechend dem Schnitt gemäß der Linie IV-IV einer weiteren Ausführungsform eines Aufbewahrungsbehälters für Platten.

Fig. 15 und 16 zeigen ausschnittweise und in zwei zueinander senkrechten Schnitten einen Aufbewahrungsbehälter für Magnetbandkassetten.

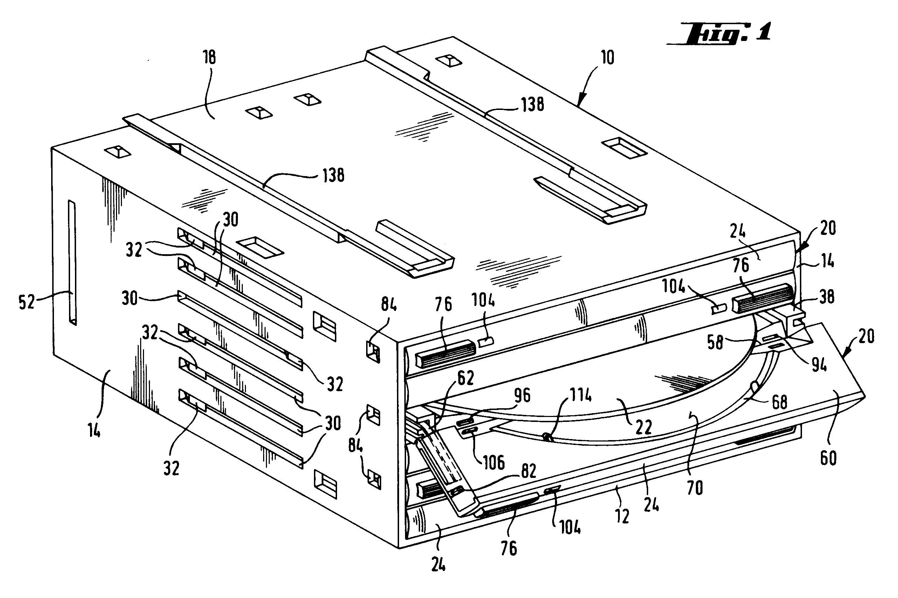

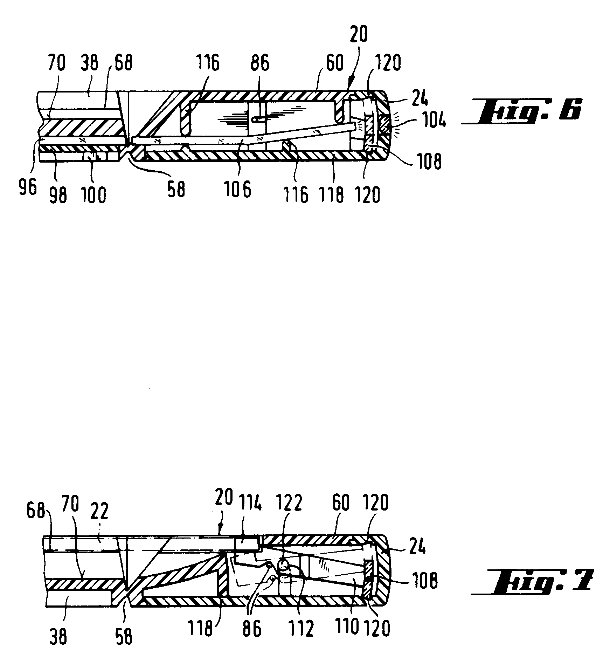

Der Behälter der Ausführungsform der Fig. 1 bis 10 umfaßt ein im wesentlichen quaderförmiges Gehäuse 10 mit einem Boden 12, Seitenwänden 14, einer Rückwand 16 und einer Deckwand 18, während es frontseitig offen ist. Das Gehäuse 10 nimmt eine Reihe von Haltern 20 für jeweils einen Aufzeichnungsträger 22, beim dargestellten Ausführungsbeispiel eine Aufzeichnungsplatte, eine sogenannte Compact-Disc, auf. Die Halter 20 sind mit einer Frontwand 24 versehen, wobei die Frontwände 24 der vom Gehäuse 10 aufgenommenen Halter 20 das Gehäuse 10 frontseitig verschließen.

Die Halter 20 sind um eine vorbestimmte Strecke teilweise aus dem Gehäuse 10 einzeln ausschiebbar, zu welchem Zweck die Seitenwände 14 des Gehäuses 10 innenseitig Führungsrippen 26 aufweisen, während die Halter 20 entsprechende seitliche Nuten 28 zum Eingriff mit den Führungsrippen 26 besitzen. In Höhe jedes Halters 20 weisen die Seitenwände 14 außerdem Schlitze 30 auf, die sich in Richtung der Ausschubbewegung der Halter 20 erstrecken und in die Anschlaghaken 32 an den Haltern 20 greifen, welche den Ausschubweg durch Auflaufen auf jeweils eine Anschlagkante 34 der Schlitze 30 begrenzen. Die Anschlaghaken 32 sind über einstückig damit ausgebildete Federzungen 36 jeweils mit einer Aufnahmeplatte 38 des jeweiligen Halters 20 verbunden, so daß sie beim erstmaligen Einschieben des Halters 20 nach innen ausfedern können.

Jeder Halter 20 besitzt eine der Frontwand 24 abgekehrte rückwärtige Kante 40, auf die eine blattförmige Auswerffeder 42 einwirkt, deren Zunge 44 den Halter 20 in Entnahmeposition vorspannt. Hierbei können insbesondere zwei kammartig ausgebildete Auswerffedern 42 vorgesehen sein, deren Zungen 44 sich abwechselnd von gegenüberliegenden Seiten einwärts erstrecken und jeweils einen Halter 20 beaufschlagen. Diese Auswerffedern 42 können zweckmäßigerweise durch eine Einführöffnung 46 an der Rückseite des Gehäuses 10 durch einen entsprechenden Schlitz eingeführt und zwischen einem zur Rückwand 16 parallelen Steg 48 und einem Anschlag 50, der sich benachbart zu einem Schlitz 52 in der Seitenwand 14 befindet, damit er ausfedern kann, angeordnet sein. Ein Steg 54 parallel zur Seitenwand 14, der mit dieser die Einführöffnung 46 begrenzt, dient zusammen mit einer hinter den Steg 54 abgewinkelten Rippe 56 zum weiteren Festlegen der Auswerffeder 42, damit diese nicht ins Gehäuse 10 fallen kann. Der Schlitz 52 erstreckt sich über weniger als die volle Höhe der Auswerffeder 42, damit diese nicht durch den Schlitz 52 aus dem Gehäuse 10 gelangen kann.

An der Aufnahmeplatte 38 des Halters 20 befindet sich frontseitig über ein Filmgelenk 58 damit verbunden eine Klappe 60. Das Filmgelenk 58 ermöglicht eine relative Schwenkbewegung der Klappe 60 gegenüber der Aufnahmeplatte 38, wobei der Winkel einerseits durch das Aneinanderstoßen der einander gegenüberliegenden Kanten der Aufnahmeplatte 38 und der Klappe 60 und andererseits durch das Anstoßen von mindestens einer Blattfeder 62 an Enden von entsprechenden Aufnahmeschlitzen 64 hierfür in der Aufnahmeplatte 38 und in der Klappe 60 begrenzt sein kann. In der nicht abgeklappten Endlage bildet die Klappe 60 eine Verlängerung der Aufnahmeplatte 38, in der der gesamte Halter 20 in das Gehäuse 10 einschiebbar ist. In der anderen Endlage - nur in dieser ist der Anschlag der Blattfeder 62 wirksam, welche die Klappe 60 in die abgeklappte Position vorspannt - ist die Klappe 60 und damit ihre Frontwand 24 soweit abgeklappt, daß die Platte 22 ohne Behinderung in den Halter 20 einlegbar bzw. aus diesem entnehmbar ist, wobei die Aufnahmeplatte 38 soweit aus dem Gehäuse 10 ausgeschoben ist, daß ihr über die Frontseite des Gehäuses 10 vorstehender Abschnitt eine Leitfläche für das Einlegen der Platte 22 bildet.

An der Aufnahmeplatte 38 des Halters 20, der die lichte Breite des Gehäuses 10 überspannt, können auf der zur Aufnahme einer Platte 22 bestimmten Oberseite mehrere Niederhalter 66 angeformt sein, deren der offenen Front des Gehäuses 10 zugekehrte Kante abgeschrägt ist und die den Außenumfang einer eingelegten Platte 22 übergreifen. Die Aufnahme der Aufnahmeplatte 38 wird durch eine ringförmige gegenüber der Oberseite vertiefte Auflagefläche 68 für den Rand der Platte 22 gebildet, die sich auf der Klappe 60 fortsetzt und aus Kratzschutzgründen eine etwa wannenförmige Eintiefung 70 begrenzen kann. Im Bereich der Auflagefläche 68 kann die Auflageplatte 38 gegebenenfalls damit einstückig ausgebildete, federnd auslenkbare zungenartige Einzugsarme 72 aufweisen, deren freie Enden einen nach oben abwinkelten und nach innen umgelegten Abschnitt 74 aufweisen. Die Einzugsarme 72 legen sich mit dem abgewinkelten Abschnitt 74 seitlich an die Platte 22 an, wenn diese in den Halter 20 eingeschoben wird bzw. ist. Hierdurch wird beim Ausschub des Halters 20 aus dem Gehäuse 10 unter der Wirkung der Auswerffeder 42 die Platte 22 gebremst, so daß sie nicht herauskatapultiert wird. Außerdem werden hierdurch Vibrationen der Platte 22 etwa bei Verwendung des Behälters in einem Kraftfahrzeug gedämpft. Beim Einschieben der Platte 22 sorgen die Einzugsarme 72 ferner dafür, daß die Platte 22 zuverlässig bis in ihre Endlage gelangt, so daß dann auch die Klappe 60 hochgeklappt werden kann. Der Benutzer spürt die Überwindung der Bremskraft der Einzugsarme 72 deutlich, so daß er gewiß sein kann, daß die Platte 22 sicher verstaut ist. Die einwärts abgekröpften Enden der Abschnitte 74 übergreifen dabei die Platte 22 und stellen sicher, daß die Einzugsarme 72 nicht unter die Platte 22 geraten können.

Um die Halter 20 im eingeschobenem Zustand im Gehäuse 10 zu halten, ist eine Verriegelungsanordnung vorgesehen, die beim dargestellten Ausführungsbeispiel jeweils aus einer Taste 76 besteht, die in der Frontwand 24 angeordnet und gegenüber dieser in der Ebene der Aufnahmeplatte 38 eindrückbar ist, wobei sie auf einen Riegelschieber 78, und zwar auf dessen Keilfortsatz 80 einwirkt, wodurch dessen Riegelfortsatz 82 aus einer Falle 84 in der Seitenwand 14 entgegen der Kraft einer Rückstellfeder 86 herausbeweglich ist. Die Rückstellfeder 86 greift am freien Ende des Riegelschiebers 78 an. Beim Wiedereinschub fällt der Riegelfortsatz 82 automatisch in die Falle 84. Damit die Tasten 76 besser betätigbar sind, sind diese abwechselnd auf der einen und der anderen Seite des Gehäuses 10 angeordnet.

Auf der Rückseite 16 des Gehäuse 10 ist eine elektrische Lichtquelle 88, etwa eine Glühbirne, vorgesehen, die im Zentrum einer Reihe von hiervon ausgehenden Lichtleitern 90 angeordnet ist. Die Lichtleiter 90, die in einer Anzahl entsprechend der Anzahl der vorgesehenen Halter 20 des Behälters vorhanden sind, erstrecken sich spinnenartig von der Lichtquelle 88 auswärts zu den seitlichen Bereichen der Rückwand 16 in die jeweilige Höhe des zugehörigen Halters 20 und dort durch die Rückwand 16 in den Behälter hinein. An der Rückwand 16 sind sich einwärts in das Gehäuse 10 erstreckende Stutzen 92 mit rechteckigem Querschnitt entsprechend dem Querschnitt der Lichtleiter 90 angeformt. Die Lichtleiter 90 enden ein Stück vor dem freien Ende der Stutzen 92 in diesen. Die Stutzen 92 befinden sich benachbart zu den freien Enden der Zungen 44 der Auswerffedern 42. Die Halter 20 besitzen unterseitig eine sich zur Frontwand 24 hin erstreckende Rinne 94 zur Aufnahme eines Lichtleiters 96 mit gleichem Querschnitt wie der Lichtleiter 90, die mittels einer Deckleiste 98 zur Unterseite des Halters 20 hin verschlossen ist. Die Deckleiste 98 ist beispielsweise über Verschnappungen 100 mit der Aufnahmeplatte 38 verbunden. Benachbart zum Stutzen 92 besitzt die Aufnahmeplatte 38 eine den Stutzen 92 teilweise umgreifende Ausnehmung 102, in der der Lichtleiter 96 mündet, so daß im eingeschobenen Zustand des Halters 20 der Lichtleiter 96 in den Stutzen 92 ragt und mit seiner Stirnseite der benachbarten Stirnseite des Lichtleiters 90 gegenüberliegt, so daß eine Lichtschleuse gebildet wird, die zudem das Austreten von Streulicht verhindert.

Die Rinne 94 setzt sich in die Klappe 60 fort, wobei das Filmgelenk 58 entsprechend unterbrochen ist, und endet vor der Frontwand 24 benachbart zu einem in der Frontwand 24 angeordnetem Fenster 104, das seinerseits benachbart zur Taste 76 angeordnet ist. Die Rinne 94 nimmt in der Klappe 60 ebenfalls einen Lichtleiter 106 mit dem gleichen Querschnitt wie die Lichtleiter 90, 96 auf. Zwischen dem frontwandseitigen Ende des Lichtleiters 106 und dem Fenster 104 ist ein Anzeige- oder Modulationsorgan 108 etwa in Form einer Signalflagge angeordnet, das an einem Ende eines Schwenkhebels 110 angeordnet ist, der im mittleren Bereich in einem Lager 112 mit offenen Lagerpfannen in der Klappe 60 gelagert ist. Das Anzeigeorgan 108 kann zwei transparente Abschnitte mit unterschiedlicher Farbe oder einen transparenten oder ausgesparten und einen nicht transparenten Abschnitt aufweisen, die entsprechend der Belegung oder Nichtbelegung des Halters 20 vor dem Fenster 104 erscheinen und eine entsprechende Leuchtanzeige liefern. Das freie Ende 114 des Schwenkhebels 110, das als Taster dient, ragt in den Auflagebereich 68 der Platte 22 auf dem Halter 20, so daß durch Einlegen einer Platte 22 der Schwenkhebel 110 niedergedrückt und das Anzeigeorgan 108 entsprechend verschwenkt wird. Die Rückstellung erfolgt über eine Rückstellfeder, hier die Rückstellfeder 86, die mit ihrem zweiten freien Ende zwischen dem Lager 112 und dem freien Ende 114 des Schwenkhebels 110 angreift, während ihr Mittelabschnitt in der Klappe 60 festgelegt ist.

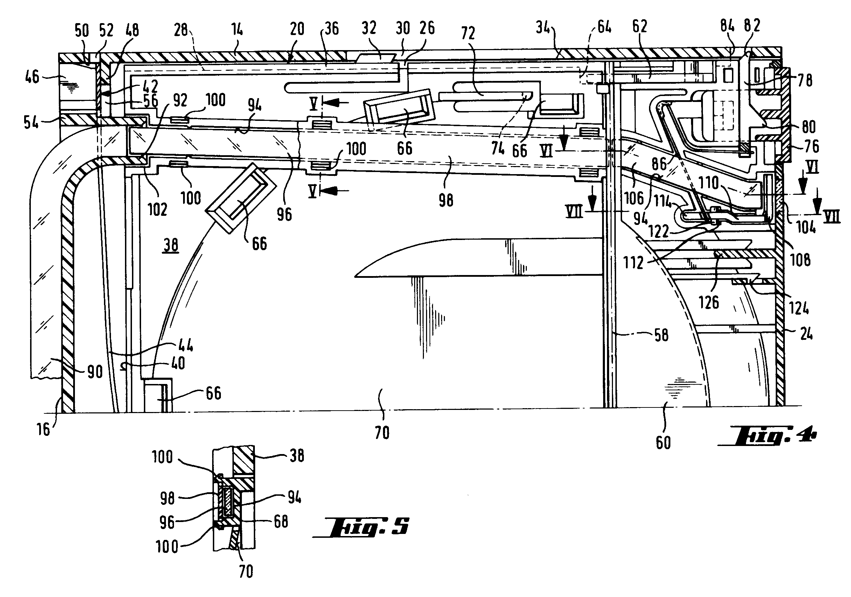

Wie aus Fig. 6 ersichtlich ist, wird der Lichtleiter 106 in der Klappe 60 durch Rippen 116 der Klappe 60 bzw. einer die Frontwand 24 bildenden Abdeckung 118 für die Klappe 60 abgestützt. Für das Modulierorgan 108 sind ein oberer und ein unterer Anschlag 120 in der Abdeckung 118 für die beiden vorgesehenen Anzeigepositionen angeordnet. Das Lager 112 ist so gestaltet, daß nach halbem Weg des Tasters 114 das Modulierorgan 108 bereits mit dem entsprechenden Anschlag 120 in Eingriff steht, wodurch die Bolzen 122 des Schwenkarms 110 aus den Lagerpfannen gedrückt werden, so daß die zweite Hälfte des Tasterweges Toleranzfeld ist. In der Leerstellung hält die Rückstellfeder 86 das Modulierorgan 108 in den Lagerpfannen (Fig. 7).

Die Abdeckung 118 reicht von der Oberseite der Klappe 60 bis auf deren Unterseite und deckt die Verriegelungs- und die Leuchtanzeigeeinrichtung ab, wobei sie durch Schnappverbindungen 124 mit der Klappe 60 verbunden und mittels Frontzentrierungen 126 zentriert angebracht ist.

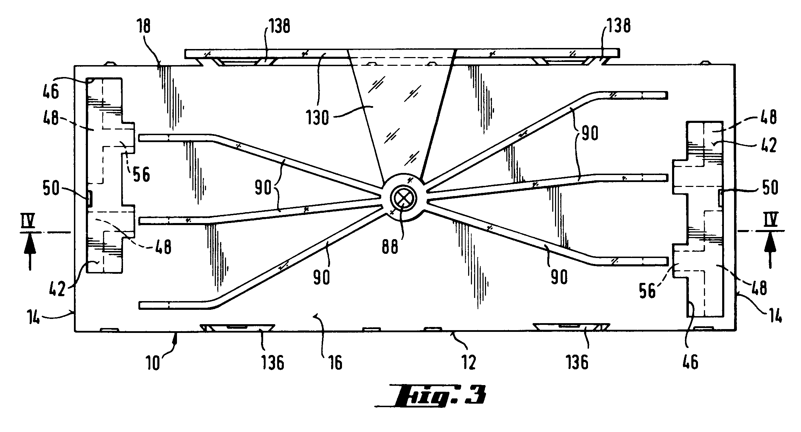

Der Halter 20 kann insbesondere spiegelsymmetrisch zur Mittelebene in Ausschubrichtung und senkrecht zur Darstellungsebene von Fig. 4 ausgebildet sein, so daß die Taste 76, der Riegelschieber 78, die Aufnahmeplatte 38, die Klappe 60, das Fenster 104, die Lichtleiter 96, 106, die Rückstellfeder 86 und die Deckleiste 98 sowohl rechtsals auch linksseitig verwendet werden können.

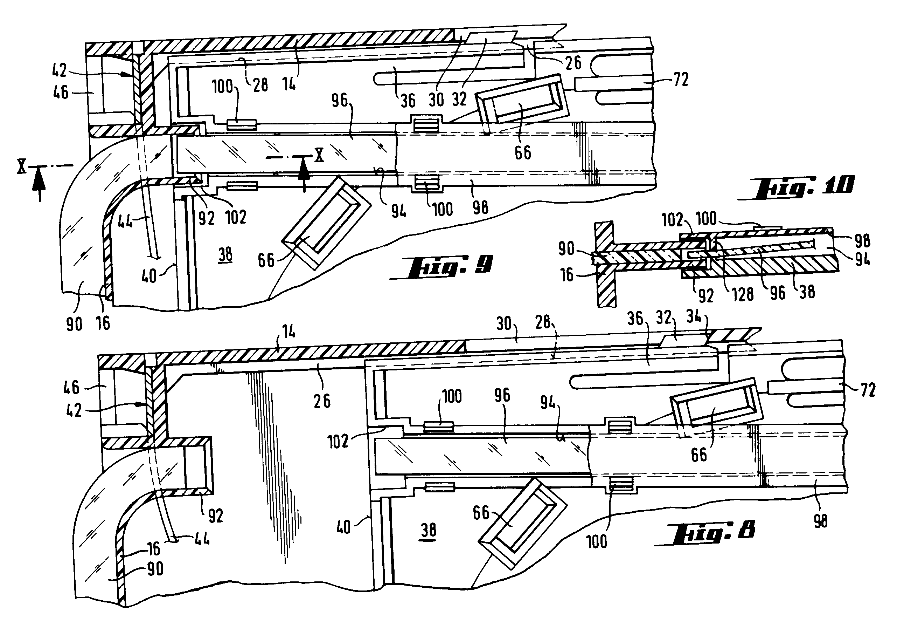

Wie aus Fig. 10 ersichtlich, wird die Ausnehmung 102 an der Unterseite der Aufnahmeplatte 38 durch die Deckleiste 98 begrenzt, die mit einem Steg 128 versehen ist, der den Lichtleiter 96 in der in den Stutzen 92 einführbaren Position hält.

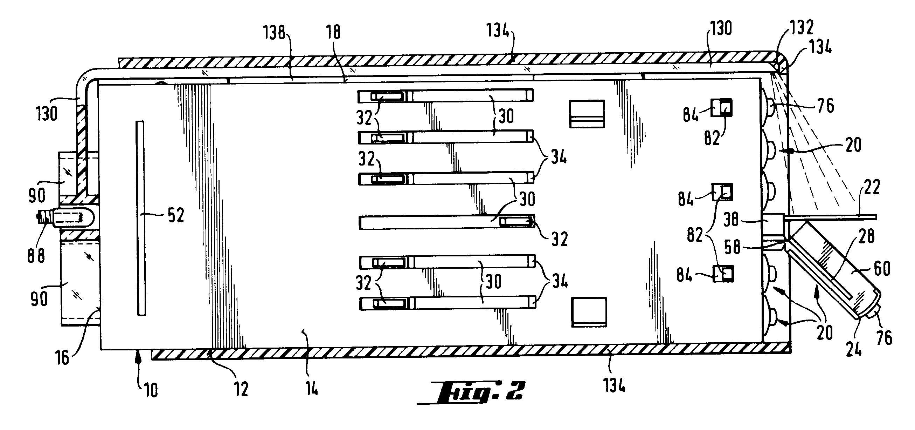

Wie aus Fig. 2 und 3 ersichtlich ist, kann ein weiterer Lichtleiter 130 auf die Deckwand 18 des Gehäuses 12 geführt sein und sich bis kurz über die Frontseite des Gehäuses 10 hinaus erstrecken. Der Lichtleiter 130 besitzt an seiner frontseitigen Kante eine sich von dessen Oberseite zu seiner Unterseite erstreckende Abschrägung 132, die Licht infolge Reflexion an dieser Abschrägung 132 auf den frontseitigen Bereich des Behälters richtet. Eine Blende 134 gegen Streulicht, die den Behälter zumindestens frontseitig umfassen kann, kann den Lichtleiter 130 frontseitig und oberseitig überdeckend vorgesehen sein.

Das Gehäuse 10 kann ober- und unterseitig mit korrespondierenden Nuten 136 und Federn 138 zum Verbinden von übereinander gestapelten Behältern versehen sein.

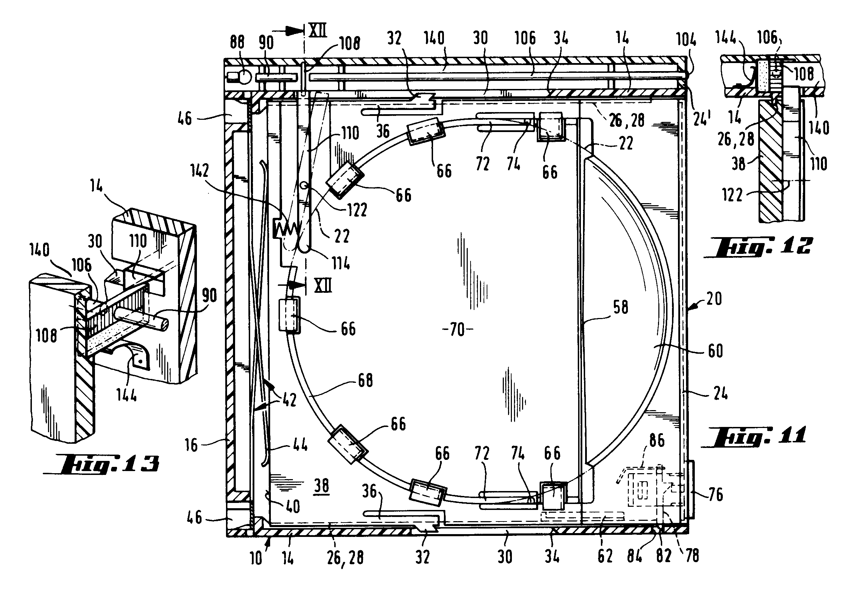

Bei der in den Fig. 11 bis 13 dargestellten Ausführungsform besitzt das Gehäuse 10 seitliche Kanäle 140, die den jeweiligen Haltern 20 zugeordnet sind. Von der Lichtquelle 88 erstecken sich Lichtleiter 90 in die Kanäle 140. Im gehäuseinneren Bereich der Aufnahmeplatte 38 ist benachbart zu dem entsprechenden Kanal 140 der Schwenkhebel 110 in seinem mittleren Bereich drehbar gelagert, wobei sein als Taster dienendes freies Ende 114 unter Einwirkung einer Druckfeder 142 in den Auflagebereich 68 der Platte 22 ragt. Das andere freie, etwa im Schnitt dreieckige Ende des Schwenkhebels 110 ragt durch eine Öffnung in der Seitenwand 14 in den Kanal 140 und steht dort mit einer Signalflagge 108 in Eingriff, die mittels einer Feder 144 gegen den Schwenkhebel 110 verschiebbar vorgespannt ist. Der Lichtleiter 90 endet benachbart zu einer Seite der Signalflagge 108, während sich von der anderen Seite bis in das Fenster 104 an dem Frontwandabschnitt 24' des Gehäuses 10 der Lichtleiter 106 erstreckt. Die Signalflagge 108 besitzt in dem dargestellten Ausführungsbeispiel zwei übereinander angeordnete transparente Abschnitte unterschiedlicher Färbung. Wird eine Platte 22 eingelegt und der Halter 20 in das Gehäuse 10 eingeschoben, drückt die Platte 22 auf den Taster 114, wodurch der Schwenkhebel 110 die Signalflagge 108 freigibt, so daß diese unter der Wirkung der Feder 144 verschoben wird, so daß eine andere Farbe im Fenster 104 als bei leerem Halter 20 erscheint.

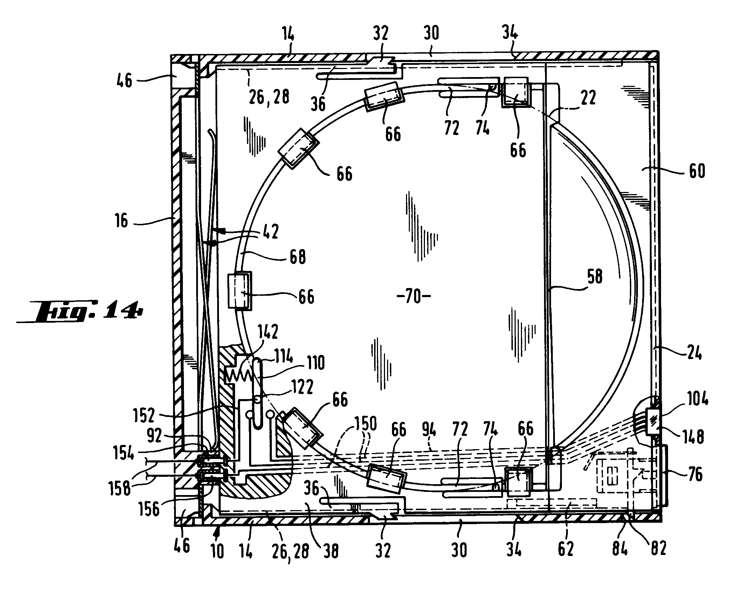

Bei der in Fig. 14 dargestellten Ausführungsform sind in den Fenstern 104 Leuchtdioden 148, gegebenenfalls auch zwei, beispielsweise in den Farben rot und grün, für jeden Halter 20 vorgesehen. Durch die Rinne 94 erstrecken sich entsprechende Zuleitungen 150, von denen bei zwei Leuchtdioden 148 zwei zu einem Schalter führen, der den Schwenkhebel 110 als Schaltelement umfaßt, der in Bezug auf die Aufnahmeplatte 38 wie in Fig. 11 angeordnet und federvorgespannt ist. Vom Schwenkhebel 110 führt eine Zuleitung 152 zu einem Steckkontakt 154 am hinteren Ende des Halters 20, während die dritte Zuleitung 150 ebenfalls zu einem weiteren Steckkontakt 156 benachbart zum Steckkontakt 154 führt. Der Stutzen 92 ist als Stecker für die Steckkontakte 154, 156 ausgebildet und mit entsprechenden Stromanschlüssen 158 versehen, die beispielsweise zu einer am Gehäuse 10 befindlichen Steckdose führen können.

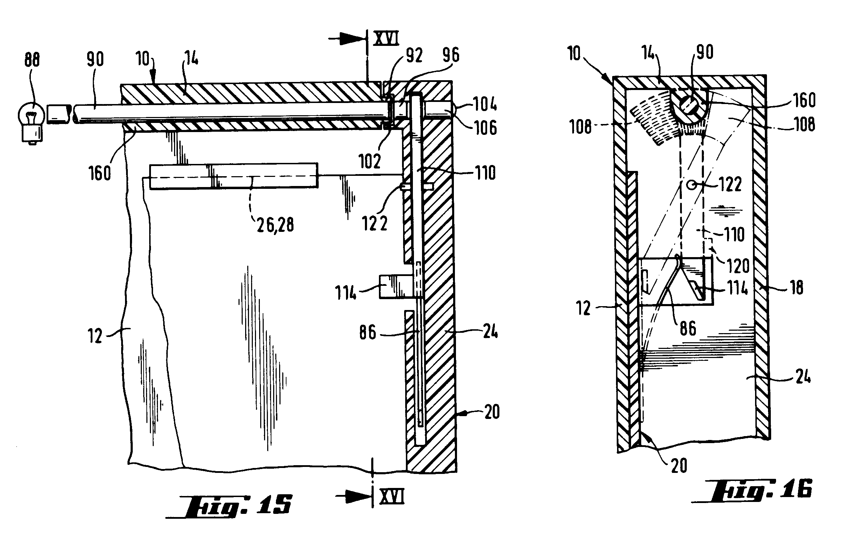

Bei der in den Fig. 15 und 16 dargestellten Ausführungsform ist ein Gehäuse 10 vorgesehen, das einen Halter 20 für eine Magnetbandkassette aufnimmt. Der Boden 12 des Gehäuses 10 besitzt Führungsschlitze 26 für den Halter 20, die sich über eine vorbestimmte Strecke erstrecken und damit den Ausschubhub des Halters 20 unter der Einwirkung der Auswerffeder 42 nach Entriegeln der Verriegelungsanordnung (beides hier nicht dargestellt) begrenzen, so daß der Halter 20 eine darin befindliche Magnetbandkassette in eine Entnahmeposition bringen kann, in der diese seitlich ergriffen und bequem entnommen werden kann. Eine Seitenwand 14 des Gehäuses 10 besitzt eine nach innen gerichtete Rippe 160, die sich von der Rückwand bis zur Vorderkante des Gehäuses 10 erstreckt und eine Bohrung aufweist, die einen Lichtleiter 90 aufnimmt, der an der Rückseite des Gehäuses 10 von der Lichtquelle 88 beleuchtet werden kann. Der Lichtleiter 90 endet in einem Stutzen 92, und zwar kurz vor dessen Ende, während die Frontwand 24 des Halters 20 eine den Stutzen 92 übergreifende Ausnehmung 102 aufweist, von der sich eine Bohrung zur Vorderseite erstreckt, die zwei Lichtleiter 96 und 106 aufnimmt, die mit Abstand zueinander angeordnet sind, damit eine Signalflagge 108 verschwenkbar zwischen diesen angeordnet werden kann. Die Bohrungen in der Rippe 160 und in der Frontwand 24 fluchten miteinander, so daß Licht von der Lichtquelle 88 zum Anzeigefenster 104, in dem der Lichtleiter 106 mündet, übertragen wird. Die Signalflagge 108 besitzt zwei Abschnitte mit unterschiedlicher Färbung, die transparent sind, und ist an einem Schwenkhebel 110 befestigt, der in der Frontwand 24 um Zapfen 122 drehbar gelagert ist und dessen der Signalfahne 108 gegenüberliegendes freies Ende einen Taster 114 trägt. Der Schwenkhebel 110 wird durch eine Feder 86 gegen einen Anschlag 120 gedrückt, so daß ein Abschnitt der Signalfahne 108 in dem Lichtweg zwischen den beiden Lichtleitern 96, 106 angeordnet ist. Durch Einlegen einer Magnetbandkassette wird der Taster 114, der in den Aufnahmeraum des Halters 20 für die Magnetbandkassette ragt, durch letztere in Richtung des Bodens des Halters 20 heruntergedrückt, wodurch der Schwenkhebel 110 um seine Schwenkachse, die parallel zur Richtung der Lichtleiterachsen verläuft, geschwenkt wird, so daß die Signalfahne 108 mit ihrem andersfarbigen Abschnitt zwischen die Lichtleiter 96, 106 geschwenkt wird, so daß im Anzeigefenster 104 eine andere Farbe als bei unbelegtem Halter 20 erscheint, wenn letzterer eingeschoben ist und Licht von der Lichtquelle 88 über die Lichtschleuse 92, 102 zum Anzeigefenster 104 übertragen wird.

**Patentansprüche**

1. Aufbewahrungsbehälter für Aufzeichnungsträger (22) mit einer frontseitig offenen Gehäusebaugruppe (10), die eine Mehrzahl von Haltern (20) für jeweils mindestens einen Aufzeichnungsträger (22) aufnimmt, wobei eine den Gehäuseinnenraum abdeckende Front vorgesehen ist, und die Halter (20) einzeln in Frontrichtung aus der Gehäusebaugruppe (10) heraus in eine Position verlagerbar sind, in der der darin befindliche Aufzeichnungsträger (22) bequem erfaßbar ist, und mit im Frontbereich angeordneten und durch frontseitige Anzeigefenster (104) sichtbaren Anzeigemitteln zum Anzeigen, welche Halter (20) mit Aufzeichnungsträgern (22) belegt sind, dadurch gekennzeichnet, daß die Anzeigemittel Lichtquellen (106, 148), die durch die Anzeigefenster (104) von außen sichtbar sind, und zugehörige Umschaltmittel (108, 110, 114) für Helligkeit oder Farbe des im jeweiligen Anzeigefenster sichtbaren Lichtes umfassen, die durch Entnehmen und Einlegen eines Aufzeichnungsträgers (22) in einen Halter (20) betätigbar sind.

2. Aufbewahrungsbehälter nach Anspruch 1, dadurch gekennzeichnet, daß durch die Umschaltmittel (108, 110, 114) eine Farbumschaltung vornehmbar ist.

3. Aufbewahrungsbehälter nach Anspruch 1, dadurch gekennzeichnet, daß durch die Umschaltmittel (108, 110, 114) eine Ein-/Ausschaltung vornehmbar ist.

4. Aufbewahrungsbehälter nach einem der Ansprüche 1 bis 3, dadurch gekennzeichnet, daß die Lichtquellen elektrische Lichtquellen (148), insbesondere Leuchtdioden, sind.

5. Aufbewahrungsbehälter nach einem der Ansprüche 1 bis 3, dadurch gekennzeichnet, daß die Lichtquellen Lichtleiter (106) sind.

6. Aufbewahrungsbehälter nach Anspruch 5, dadurch gekennzeichnet, daß für die Lichtleiter (106) eine gemeinsame elektrische Lichtquelle (88) vorgesehen ist.

7. Aufbewahrungsbehälter nach Anspruch 4, dadurch gekennzeichnet, daß für jeden Aufzeichnungsträger (22) zwei elektrische Lichtquellen (148) unterschiedlicher Farbe vorgesehen sind.

8. Aufbewahrungsbehälter nach einem der Ansprüche 1 bis 7, dadurch gekennzeichnet, daß die Umschaltmittel (108, 110) elektrische Schalter sind.

9. Aufbewahrungsbehälter nach einem der Ansprüche 1 bis 6, dadurch gekennzeichnet, daß die Umschaltmittel (108, 110, 114) Lichtmodulationsmittel (108) umfassen.

10. Aufbewahrungsbehälter nach Anspruch 9, dadurch gekennzeichnet, daß die Lichtmodulationsmittel (108) zwei transparente Felder aufweisen, von denen wenigstens eines farbig ist.

11. Aufbewahrungsbehälter nach Anspruch 10, dadurch gekennzeichnet, daß die beiden Felder quer zur Lichtstromrichtung benachbart angeordnet und abwechselnd entsprechend dem Vorhandensein bzw. Nichtvorhandensein des Aufzeichnungsträgers in den Lichtweg zum Anzeigefenster (104) bringbar sind.

12. Aufbewahrungsbehälter nach Anspruch 10, dadurch gekennzeichnet, daß die beiden Felder in Lichtstromrichtung hintereinander angeordnet sind, wobei wenigstens ein Feld durch Einlegen eines Aufzeichnungsträgers (22) in den Lichtweg bringbar ist.

13. Aufbewahrungsbehälter nach Anspruch 9, dadurch gekennzeichnet, daß die Modulationsmittel (108) eine in den Lichtweg zum Anzeigefenster (104) bringbare Blende umfassen.

14. Aufbewahrungsbehälter nach Anspruch 13, dadurch gekennzeichnet, daß der Aufzeichnungsträger (22) als Blende dient, indem der Lichtweg von der Lichtquelle (106) zum Anzeigefenster (104) durch den Aufnahmebereich des Aufzeichnungsträgers (22) im Halter (20) führt.

15. Aufbewahrungsbehälter nach einem der Ansprüche 1 bis 14, dadurch gekennzeichnet, daß der Halter (20) eine Frontwand (24) aufweist, in der das Anzeigefenster (104) angeordnet ist.

16. Aufbewahrungsbehälter nach einem der Ansprüche 1 bis 14, dadurch gekennzeichnet, daß das Gehäuse (10) einen Frontwandabschnitt (24') aufweist, in dem die Anzeigefenster (104) angeordnet sind.

17. Aufbewahrungsbehälter nach einem der Ansprüche 1 bis 16, dadurch gekennzeichnet, daß ein Tastorgan (114) im Aufnahmebereich des Halters (20) für den Aufzeichnungsträger (22) vorgesehen ist.

18. Aufbewahrungsbehälter nach einem der Ansprüche 1 bis 16, dadurch gekennzeichnet, daß das Gehäuse (10) Tastorgane (114), die in die Aufnahmebereiche der Aufzeichnungsträger (22) auf den Haltern (20) ragen, aufweist.

19. Aufbewahrungsbehälter nach einem der Ansprüche 1 bis 18, dadurch gekennzeichnet, daß das Umschaltmittel (108, 110, 114) im Halter (20) angeordnet ist.

20. Aufbewahrungsbehälter nach Anspruch 19, dadurch gekennzeichnet, daß bei als elektrischer Schalter ausgebildetem Umschaltmittel (108, 110) die Stromversorgung der Lichtquellen (106, 148) bei in Entnahmeposition für den Aufzeichnungsträger (22) befindlichem Halter (20) unterbrochen ist.

21. Aufbewahrungsbehälter nach Anspruch 20, dadurch gekennzeichnet, daß zwischen Gehäuse (10) und Halter (20) eine Steckkontaktierung (92, 154, 156, 158) vorgesehen ist.

22. Aufbewahrungsbehälter nach Anspruch 20, dadurch gekennzeichnet, daß zwischen Gehäuse (10) und Halter (20) eine Schleifkontaktierung vorgesehen ist.

23. Aufbewahrungsbehälter nach einem der Ansprüche 19 bis 22, dadurch gekennzeichnet, daß die Lichtquelle (148) im Halter (20) angeordnet ist.

24. Aufbewahrungsbehälter nach einem der Ansprüche 5 bis 22, dadurch gekennzeichnet, daß die Lichtleiter (106) in dem Gehäuse (10) angeordnet und zu den Anzeigefenstern (104) geführt sind.

25. Aufbewahrungsbehälter nach einem der Ansprüche 5 bis 23, dadurch gekennzeichnet, daß die Lichtleiter (96, 106) durch die Halter (20) geführt sind.

26. Aufbewahrungsbehälter nach Anspruch 25, dadurch gekennzeichnet, daß zwischen Gehäuse (10) und Halter (20) eine Lichtleiterkupplung (92, 102) vorgesehen ist.

27. Aufbewahrungsbehälter nach einem der Ansprüche 24 bis 26, dadurch gekennzeichnet, daß die Lichtleiter (96, 106) abgedeckt bis in den Bereich der Anzeigefenster (104) geführt sind.

28. Aufbewahrungsbehälter nach einem der Ansprüche 24 bis 27, dadurch gekennzeichnet, daß das Modulationsmittel (108) zwischen Lichtleiterabschnitte (90, 106) schwenkbar ist.

29. Aufbewahrungsbehälter nach einem der Ansprüche 1 bis 28, dadurch gekennzeichnet, daß die Umschaltmittel (108, 110, 114) einen Schwenkhebel (110) umfassen, der in eine erste Endstellung federvorgespannt ist.

30. Aufbewahrungsbehälter nach Anspruch 29, dadurch gekennzeichnet, daß der Schwenkhebel (110) eine toleranzausgleichende Lagerung (122) besitzt.

31. Aufbewahrungsbehälter nach Anspruch 30, dadurch gekennzeichnet, daß die Lagerung (122) offene Lagerschalen aufweist und ein Anschlag (120) vorgesehen ist, der eine zweite Endstellung definierend bereits nach einer Teilschwenkung des Schwenkhebels (110) erreicht wird.

32. Aufbewahrungsbehälter nach einem der Ansprüche 1 bis 31, dadurch gekennzeichnet, daß benachbart zu dem Anzeigefenster (104) eine Betätigungstaste (76) zum Bringen des Halters (20) in die Entnahmeposition für den Aufzeichnungsträger (22) vorgesehen ist.

33. Aufbewahrungsbehälter nach Anspruch 6, dadurch gekennzeichnet, daß von der gemeinsamen Lichtquelle (88) spinnenartig Lichtleiter (90) zu den Ebenen der einzelnen Halter (20) im Gehäuse (10) führen.

34. Aufbewahrungsbehälter nach einem der Ansprüche 5 bis 33, dadurch gekennzeichnet, daß der Halter (20) eine damit gelenkig verbundene frontseitige Klappe (60) aufweist, wobei für beide Teile jeweils ein Lichtleiter (96, 106) vorgesehen ist, die bei fluchtenden Teilen (20, 60) stirnseitig gekoppelt sind.

35. Aufbewahrungsbehälter nach einem der Ansprüche 1 bis 34, dadurch gekennzeichnet, daß weitere Elemente der Front durch die Lichtquellen (106, 148) beleuchtbar sind.

36. Aufbewahrungsbehälter nach einem der Ansprüche 1 bis 35, dadurch gekennzeichnet, daß Beleuchtungsmittel (130) vorgesehen sind, deren Strahlung auf die Front des Gehäuses (10) gerichtet ist.

37. Aufbewahrungsbehälter nach Anspruch 36, dadurch gekennzeichnet, daß ein sich von der gemeinsamen Lichtquelle (88) zur Frontseite des Gehäuses (10) sich erstreckender Lichtleiter (130) vorgesehen ist.

38. Aufbewahrungsbehälter nach einem der Ansprüche 5 bis 37, dadurch gekennzeichnet, daß die Lichtleiter (90, 96, 106, 130) faseroptische Lichtleiter sind.

39. Aufbewahrungsbehälter nach einem der Ansprüche 1 bis 38, dadurch gekennzeichnet, daß die Anzeigemittel mit Auflichtreflexfarbe versehen sind.

40. Aufbewahrungsbehälter nach einem der Ansprüche 1 bis 39, dadurch gekennzeichnet, daß die Umschaltmittel (108, 110, 114) ein Betätigungsmittel (110) im gehäuseinnenseitigen Bereich des Halters (20) aufweisen, das durch den Druck einer benachbarten Endkante des eingelegten Aufzeichnungsträgers (22) auslenkbar ist.

41. Aufbewahrungsbehälter nach einem der Ansprüche 5 bis 40, dadurch gekennzeichnet, daß die Lichtleiter Kunststoffspritzteile sind.

**Claims**

1. Storage container for recording media (22) having a housing assembly (10) open at the front and accommodating a plurality of holders (20), each for at least one recording medium (22), a front being provided which covers over the inside of the housing, and the holders (20) being arranged to be moved individually to the front out of the housing assembly (10) into a position in which the recording medium (22) contained therein can be easily grasped, and having indicator means, arranged in the front region and visible through indicator windows (104) at the front, to indicate which holders (20) are occupied by recording media (22), characterised in that the indicator means comprise light sources (106,148) which are visible from the outside through the indicator windows (104), and corresponding switchover means (108,110,114) for brightness or colour of the light visible in the respective indicator window and which can be actuated by the removal and insertion of a recording medium (22) from or into a holder (20).

2.  Storage container according to Claim 1, characterised in that a colour change is arranged to be brought about by the switchover means (108,110,114).

3.  Storage container according to Claim 1, characterised in that a switching-in or switching-out operation is arranged to be brought about by the switchover means (108,110,114).

4.  Storage container according to Claims 1 to 3, characterised in that the light sources are electrical light sources (148), especially luminous diodes.

5.  Storage container according to one of Claims 1 to 3, characterised in that the light sources are light guides (106).

6.  Storage container according to Claim 5, characterised in that a common electrical light source (88) is provided for the light guides (106).

7.  Storage container according to Claim 4, characterised in that for each recording medium (22) two electrical light sources (148) of different colours are provided, respectively.

8.  Storage container according to one of Claims 1 to 7, characterised in that the switchover means (108,110) are electrical switches.

9.  Storage container according to one of Claims 1 to 6, characterised in that the switchover means (108,110,114) comprise light modulation means (108).

10. Storage container according to Claim 9, characterised in that the light modulation means (108) have two transparent fields, at least one of which is coloured.

11. Storage container according to Claim 10, characterised in that the two fields are arranged transversely to the direction of travel of the light so that they are adjacent and can be brought alternately into the light path to the indicator window (104), depending on the presence or absence of the recording medium.

12. Storage container according to Claim 10, characterised in that the two fields are arranged one behind the other in the direction of travel of the light, at least one field being arranged to be brought into the light path by the insertion of a recording medium (22).

13. Storage container according to Claim 9, characterised in that the modulation means (108) comprise a light-stop which can be brought into the light path to the indicator window (104).

14. Storage container according to Claim 13, characterised in that the recording medium (22) serves as a light-stop, in that the light path from the light source (106) to the indicator window (104) leads through the region receiving the recording medium (22) in the holder (20).

15. Storage container according to one of Claims 1 to 14, characterised in that the holder (10) has a front wall (24) in which the indicator window (104) is arranged.

16. Storage container according to one of Claims 1 to 14, characterised in that the housing (10) has a front wall section (24') in which the indicator windows (104) are arranged.

17. Storage container according to one of Claims 1 to 16, characterised in that a feeler (114) is provided for the recording medium (22) in the receiving region of the holder (20).

18. Storage container according to one of Claims 1 to 16, characterised in that the housing (10) has feelers (114) which project into the receiving region for the recording medium (22) on the holders (20).

19. Storage container according to one of Claims 1 to 18, characterised in that the switchover means (108,110,114) is arranged in the holder (20).

20. Storage container according to Claim 19, characterised in that where the switchover means (108,110) are in the form of electrical switches, the current supply to the light sources (106,148) is interrupted when the holder (20) is in the position for removal of the recording medium (22).

21. Storage container according to Claim 20, characterised in that a plug-in contact means (92,154,156,158) is provided between the housing (10) and the holder (20).

22. Storage container according to Claim 20, characterised in that a sliding contact means is provided between the housing (10) and the holder (20).

23. Storage container according to one of Claims 19 to 22, characterised in that the light source (148) is arranged in the holder (20).

24. Storage container according to one of Claims 5 to 22, characterised in that the light guides (106) are arranged in the housing (10) and are led to the indicator windows (104).

25. Storage container according to one of Claims 5 to 23, characterised in that the light guides (96,106) are led through the holders (20).

26. Storage container according to Claim 25, characterised in that a light guide coupling (92,102) is provided between the housing (10) and the holder (20).

27. Storage container according to one of Claims 24 to 26, characterised in that the light guides (96,106) are led, covered over, into the region of the indicator windows (104).

28. Storage container according to one of Claims 24 to 27, characterised in that the modulation means (108) is pivotable between light guide sections (90,106).

29. Storage container according to one of Claims 1 to 28, characterised in that the switchover means (108,110,114) comprise a pivoted lever (110) which is biased by springs into a first end position.

30. Storage container according to Claim 29, characterised in that the pivoted lever (110) has a bearing means (122) compensating for tolerances.

31. Storage container according to Claim 30, characterised in that the bearing means (122) has open bearing shells, and a stop member (120) is provided which, defining a second end position, is reached after partial pivoting of the pivoted lever (110).

32. Storage container according to one of Claims 1 to 31, characterised in that adjacent to the indicator window (104) an actuating button (76) is provided to bring the holder (20) into the position for removal of the recording medium (22).

33. Storage container according to Claim 6, characterised in that from the common light source (88) light guides (90) lead spider-like to the planes of the individual holders (20) in the housing (10).

34. Storage container according to one of Claims 5 to 33, characterised in that the holder (20) has a front flap (60), hinged onto it, wherein a respective light guide (96,106) is provided for each of the two parts and the light guides are coupled at their end faces when the parts (20,60) are flush.

35. Storage container according to one of Claims 1 to 34, characterised in that further elements of the front can be illuminated by means of the light sources (106,148).

36. Storage container according to one of Claims 1 to 35, characterised in that illumination means (130) are provided, the radiation from which is directed to the front of the housing (10).

37. Storage container according to Claim 36, characterised in that a light guide (130) extending from the common light source (88) to the front side of the housing (10) is provided.

38. Storage container according to one of Claims 5 to 37, characterised in that the light guides (90,96,106,130) are fibre-optic light guides.

39. Storage container according to one of Claims 1 to 38, characterised in that the indicator means are provided with incident light reflex colour.

40. Storage container according to one of Claims 1 to 39, characterised in that the switchover means (108,110,114) have an actuating means (110) in the region of the holder (20) located inside the housing and which can be displaced by the pressure of an adjacent end edge of the inserted recording medium (22).

41. Storage container according to one of Claims 5 to 40, characterised in that the light guides are injection-moulded plastic parts.

## Revendications

1. Boîtier d'emmagasinage de supports (22) d'enregistrement comportant un ensemble frontal ouvert (10) de boîtier qui recoit plusieurs logements (20) destinés chacun au moins à un support (22) d ,enregistrement, une façade recouvrant l'espace intérieur de boîtier étant prévue et les supports (22) pouvant être sortis individuellement en direction de la façade hors de l'ensemble (10) de boîtier dans une position dans laquelle le support (22) d'enregistrement qui s'y trouve est facile à saisir, et des moyens d'affichage disposés dans la zone trontale et visibles à travers des fenêtres (104) frontales d'affichage pour afficher quels logements (20) sont garnis de supports (22) d'enregistrement caractérisé en ce que les moyens d'affichage comprennent des sources lumineuses (106, 148) qui sont visibles de l'extérieur à travers les fenêtres (104) d'affichage et, pour l'éclairage ou la coloration de la lumière visible dans la fenêtre d'affichage correspondante, des moyens commutateurs associés (108, 110, 114) qui peuvent être actionnées lors du prélèvement et de l'insertion d'un support (22) d'enregistrement dans un logement (20).

2. Boîtier d'emmagasinage selon la revendication 1, caractérisé an ce qu'une commutation de couleur peut être réalisée à l'aide des moyens commutateurs (108, 110, 114).

3. Boîtier d'emmagasinage selon la revendication 1, caractérisé en ce qu'une mise en fonction ou hors fonction peut être réalisée à l'aide des moyens commutateurs (108, 110, 114).

4. Boîtier d'emmagasinage selon l'une des revendications 1 à 3, caractérise en ce que les sources lumineuses sont des sources lumineuses électriques (148) , en particulier des diodes électroluminescentes.

5. Boîtier d'emmagasinage selon l'une des revendications 1 à 3, caractérisé en ce que les sources de lumière sont des conducteurs lumineux (106).

6. Boîtier d'emmagasinage selon la revendication 5, caractérisé en ce qu'une source lumineuse commune (88) est prévue pour les conduits lumineux (106).

7. Boîtier d'emmagasinage selon la revendication 4, caractérisé en ce que deux sources lumineuses électriques (148) de couleurs différentes sont prévues pour chaque support (22) d'enregistrement.

8. Boîtier d'emmagasinage selon l'une des revendications 1 à 7, caractérise en ce que les moyens commutateurs (108, 110) sont des commutateurs électriques.

9. Boîtier d'emmagasinage selon l'une des revendications 1 à 6, caractérisé en ce que les moyens commutateurs (108, 110, 114) comprennent des moyens (108) de modulation de lumière.

10. Boîtier d'emmagasinage selon la revendication 9, caractérisé en ce que les moyens (108) de modulation de lumière comportant deux champs transparents dont au moins l'un est coloré.

11. Boîtier d'emmagasinage selon la revendication 10, caractérisé en ce que les deux champs sont disposés au voisinage l'un de l'autre entre eux transversalement à la direction du flux lumineux et peuvent être amenés en alternance dans le trajet lumineux allant vers la fenêtre d'affichage (104) selon la présence ou l'absence du support d'enregistrement.

12. Boîtier d'emmagasinage selon la revendication 10, caractérisé en ce que les deux champs sont disposés l'un derrière l'autre dans la direction du flux lumineux, au moins un champs pouvant être amené dans le trajet lumineux par insertion d'un support (22) d'enregistrement.

13. Boîtier d'emmagasinage selon la revendication 9, caractérisé en ce que les moyens de modulation (108) comprennent un volet qui peut être amené dans le trajet lumineux allant vers la fenêtre d'affichage (104).

14. Boîtier d'emmagasinage selon la revendication 13, caractérisé en ce que le support (22) d'enregistrement sert de volet, le trajet lumineux depuis la source lumineuse (106) jusqu'à la fenêtre d'affichage (104) traversant la zone de réception du support (22) d'enregistrement dans le logement (20).

15. Boîtier d'emmagasinage selon l'une des revendications 1 à 14, caractérisé en ce que le logement (20) comporte une paroi frontale (24) dans laquelle est disposée la fenêtre d'affichage (104).

16. Boîtier d'emmagasinage selon l'une des revendications 1 à 14, caractérisé en ce que le boîtier (10) comporte une partie (24') de paroi frontale dans laquelle sont disposées les fenêtres d'affichage (104).

**17.** Boîtier d'emmagasinage selon l'une des revendications 1 à 16, caractérisé en ce qu'il est prevu, dans la zone de réception du logement (20), un organe palpeur (114) destiné aux supports (22) d'enregistrement.

**18.** Boîtier d'emmagasinage selon l'une des revendications 1 à 16, caractérisé en ce que le boîtier (10) comporte des organes palpeurs (114) qui font saillie dans les zones de réception des supports (22) d'enregistrement sur les logements (20).

**19.** Boîtier d'emmagasinage selon l'une des revendications 1 à 18, caractérisé en ce que le moyen de commutateur (108, 110, 114) est disposé dans le logement (20).

**20.** Boîtier d'emmagasinage selon la revendication 19, caractérisé en ce que, lorsque le moyen commutateur (108, 110) est réalisé sous forme de commutateur électrique, l'alimentation en courant des sources lumineuses (106, 148) est interrompue lorsque le logement (20) se trouve dans la position de prélèvement des supports (22) d'enregistrement.

**21.** Boîtier d'emmagasinage selon la revendication 20, caractérisé en ce qu'il est prévu entre le boîtier (10) et le logement (20) un ensemble de contacts par enfoncement (92, 154, 156, 158).

**22.** Boîtier d'emmagasinage selon la revendication 20, caractérisé en ce qu'il est prévu entre le boîtier (10) et le logement (20) un ensemble de contacts à frottement.

**23.** Boîtier d'emmagasinage selon l'une des revendications 19 à 22, caractérisé en ce que la source lumineuse (148) est disposée dans le logement (20).

**24.** Boîtier d'emmagasinage selon l'une des revendications 5 à 22, caractérisé en ce que les conducteurs lumineux (106) sont disposés dans le boîtier (10) et sont amenés aux fenêtres d'affichage (104).

**25.** Boîtier d'emmagasinage selon l'une des revendications 5 à 23, caractérisé en ce que les conducteurs lumineux (96, 106) sont amenés à travers le logement (20).

**26.** Boîtier d'emmagasinage selon la revendication 25, caractérisé en ce qu'il est prevu entre le boîtier (10) et le logement (20) un couplage (92, 102) de conducteurs lumineux.

**27.** Boîtier d'emmagasinage selon l'une des revendications 24 à 26, caractérisé en ce que les conducteurs lumineux (96, 106) sont amenés sous revêtement jusque dans la zone des fenêtres d'affichage (104).

**28.** Boîtier d'emmagasinage selon l'une des revendications 24 à 27, caractérisé en ce que le moyen de modulation (108) peut pivoter entre des parties (90, 106) de conducteurs lumineux.

**29.** Boîtier d'emmagasinage selon l'une des revendications 1 à 28, caractérisé en ce que les moyens commutateurs (108, 110, 114) comportent un levier pivotant (110) qui est sollicité de manière élastique dans une première position de fin de course.

**30.** Boîtier d'emmagasinage selon la revendication 29, caractérisé en ce que le levier pivotant (110) posséde un logement (122) de compensation de tolérances.

**31.** Boîtier d'emmagasinage selon la revendication 30, caractérisé en ce que le logement (122) comporte des enveloppes ouvertes de logement et en ce qu'il est prevu une butée (120) qui est déjà atteinte, en définissant une deuxième position de fin de course, après un pivotement partiel du levier pivotant (110).

**32.** Boîtier d'emmagasinage selon l'une des revendications 1 à 31, caractérisé en ce qu'il est prévu, au voisinage de la fenêtre d'affichage (104), une touche d'actionnement (76) pour amener le logement (20) dans la position de prélèvement du support (22) d'enregistrement.

**33.** Boîtier d'emmagasinage selon la revendication 6, caractérisé en ce que des conducteurs lumineux (90) conduisent à la manière d'une tresse depuis la source lumineuse commune (88) vers les plans des logements individuels (20) dans le boîtier (10).

**34.** Boîtier d'emmagasinage selon l'une des revendications 5 à 33, caractérisé en ce que le logement (20) comporte un volet frontal (60) qui lui est relié d'une manière articulée, un conducteur lumineux (96, 106) étant prévu pour chacun des deux éléments (20, 60) qui sont accouplés face à face lorsqu'ils sont alignés.

**35.** Boîtier d'emmagasinage selon l'une des revendications 1 à 34, caractérisé en ce que d'autres éléments de la façade peuvent être éclairés par les sources lumineuses (106, 148).

**36.** Boîtier d'emmagasinage selon l'une des revendications 1 à 35, caractérisé en ce qu'il est prévu des moyens d'éclairage (130) dont le rayonnement est dirigé vers la façade du boîtier (10).

**37.** Boîtier d'emmagasinage selon la revendication 36, caractérisé en ce qu il est prévu un conducteur lumineux (130) s'étendant depuis la source lumineuse commune (88) vers la façade frontale du boîtier (10).

**38.** Boîtier d'emmagasinage selon l'une des revendications 5 à 37, caractérisé en ce que les conducteurs lumineux (90, 96, 106, 130) sont des conducteurs lumineux à fibres optiques.

**39.** Boîtier d'emmagasinage selon l'une des revendications 1 à 38, caractérisé en ce que les moyens d'affichage sont pourvus d'une couleur par réflexion de lumière incidente.

**40.** Boîtier d'emmagasinage selon l'une des revendications 1 à 39, caractérisé en ce que les moyens commutateurs (108, 110, 114) comportent dans la zone latérale intérieure du logement (20), un moyen d'actionnement (110) qui peut être écarté vers l'extérieur par la pression d'une arête d'extrémité du support (22) d'enregistrement inséré qui en est voisine.

**41.** Boîtier d'emmagasinage selon l'une des revendications 5 à 40, caractérisé en ce que les conducteurs lumineux sont des éléments en matière plastique moulés par injection.

**Fig. 1**

Fig. 2

**Fig.3**

EP 0 229 937 B1

Fig. 4

Fig. 5

17

*Fig. 6*

*Fig. 7*

Fig. 10

Fig. 9

Fig. 8

EP 0 229 937 B1

*Fig: 13*

*Fig: 11*

*Fig: 12*

EP 0 229 937 B1

Fig. 14.

Fig. 16

Fig. 15